# EUROPEAN PATENT SPECIFICATION

(11) **EP 1 685 947 B1**
(45) Date of publication and mention of the grant of the patent: **13.04.2011**
(21) Application number: 05002047.8
(22) Date of filing: 01.02.2005
(51) Int. Cl.: B29C 70/48, B29C 70/16, B29C 70/54

(54) **Method for the manufacture of FRP composites**
Verfahren zur Herstellung faserverstärkter Verbundwerkstoffen
Procédé de fabrication de matériaux composites renforcés par des fibres

(43) Date of publication of application: 02.08.2006
(73) Proprietor: HONDA MOTOR CO., LTD., Tokyo (JP)
(72) Inventor: Ishii Masashi, D-60439 Frankfurt (DE); Mitschang Peter, D-67663 Kaiserslautern (DE); Weyrauch Florian, D-67663 Kaiserslautern (DE)
(74) Representative: Rupp, Christian

(56) References cited:
- DE-U1- 29 904 191
- FR-A- 2 783 197
- US-A- 5 279 892
- US-B1- 6 250 193
- K. VAN HARTEN: "Resin Transfer Moulding" 1991, TU DELFT , DELFT , XP002335906 * pages V-9 - pages V-10 * * pages I-2, paragraph 1.3; figure 1 * * pages VI-9, paragraph 4.1 - pages VI-10 *

## Description

### FIELD OF THE INVENTION

The present invention relates to a fibre-reinforced plastics (FRP) composite, a process for manufacturing the same and to a device for carrying out such process. Specifically, the present invention relates to a heavy tow (thick bundle) FRP-composite free of "dry spots", to a process for manufacturing such composite by preventing "racetracking" and to a device for carrying out such process. Applying the invention results in the manufacture of low cost FRP composites which exhibit good performance.

### BACKGROUND OF THE INVENTION

Composite materials and in particular CFRP (carbon fibre reinforced plastics) composite materials are characterised by their low weight, great strength and high stiffness in comparison with traditional materials such as wood, steel, aluminium etc. For these reasons, they are used in a number of applications ranging from the aerospace, construction, automotive industries to the sports and medical fields.

In the 1970s, for instance, sporting good manufacturers started making use of CFRP composites in the manufacture of fishing rods, golf clubs, tennis rackets. In the 1990s, commercial plane manufacturers such as Boeing and Airbus started adopting CFRP composites for primary and secondary structural parts in order to reduce the weight of planes and have highly performing flying machines. Nowadays, because of their high strength and light weight, these CFRPs can be used for the reinforcement of structures and their use is expanding to the building and civil engineering field. The medical field also makes use of the composites for X-ray inspection equipment and even for artificial limbs. In yet another application, the performance of CFRP composites is contributing to the reduction of weight of housing electronic tools and equipment such as laptops, LCD projectors, cameras etc.

One sector where the use of composite materials is constantly evolving is the automotive industry. So far, CFRP composites have been indispensable for racing cars. However, as a result of increasing attention to environmental problems, there's a tendency to try to use these composites for commercial, mass-produced cars. Indeed, composite materials offer great potential in reducing vehicle weight, thus increasing fuel efficiency and reducing CO₂ emissions.

Traditional FRP manufacturing processes include pultrusion or resin moulding processes. The Resin Transfer Moulding (RTM) process has been in use for decades. It is one of the best methods for making composite parts, and is uniquely capable of satisfying the low-cost/high-volume 500-50,000 parts per year of the automotive industry as well as the higher performance/lower volume 50-5,000 parts per year of the aerospace industry.

The resin transfer moulding process is fairly simple: a two-part, matched-metal mould (or tool) is made. A preform is placed into the mould, and the mould is closed. A resin is then pumped under low pressure through injection ports into the mould. Both the mould and resin can be heated as needed for the application.

Traditionally, both thermoplastic and thermoset resins are used to produce composite materials. However, for structural applications, thermoplastic resins have always lacked the mechanical properties of thermoset resins. Mainly, poor fibre impregnation and lack of fibre adhesion cause this performance gap. Thermoplastic resin typically used in the manufacture of CFRP composites starts off with a high viscosity, typically 100-1000 Pa.s, and thus impregnation becomes a difficult task. On the other hand, thermoplastic resins offer the advantage that they can be recycled and in an environmental context, this becomes important.

Low viscosity thermoplastic resins have recently been developed. For instance, US 6673872 describes the addition of a polyarylene ether having a low intrinsic viscosity to high performance, amorphous thermoplastic polymers providing highly improved melt flow properties to such polymers, without causing degradation of important mechanical properties such as impact strength and ductility.

With RTM, one is capable of making complex and high quality composite parts with short cycle times. However, by introducing more complexity into the part, one also introduces higher probability of disturbances, such as racetracking of resin during impregnation along the preform edges. Racetracking is a phenomenon whereby the resin travels more quickly along a mould edge due to the lower fibre volume fraction in this region providing less resistance to flow. With severe racetracking, the exiting resin can bypass some of the fibres and produce dry spots within the composite. This results in poor quality FRP composites.

Another possible disturbance is the displacement of the fibres during the RTM process. For example, if the matrix viscosity is too low and the timescales long, shaping pressures may cause the resin to be squeezed out of the laminate. Alternatively, too high a viscosity coupled with a short duration can result in the fibres being unable to adjust to the flow pattern and distortion can ensue.

These disturbances are a function of the fabric type, resin type, preform manufacturing method, the placement of fibres and the fibre distribution in the cavity mould. Their impact on the behaviour of the FRP component is of high importance and their elimination is thus vital for high performance applications.

Endeavour towards eliminating racetracking is described in US 6406660. Indeed, therein is described a vacuum bag method for the manufacture of CFRP free of race tracking defects. In the invention, "racetracking" can be prevented by cutting the fabrics to a particular pattern and supporting the cover plate in a slightly different manner. In this invention resin with a viscosity less than 500 mPa*s may be used.

The introduction of high performance FRP components in any structure however significantly depends on the raw material and the manufacturing process costs. So far, the cost of FRP containing materials has been very high and often prohibitive for the general consumer. Therefore, significant endeavour to reduce the cost of such manufacturing process has been a high priority for manufacturers. For instance, JP 2003-020542 describes a process for the manufacture of CFRP composites from carbon fibre fabric for use as aircraft structural members, wherein the cost of the process is reduced by the use of less expensive carbon fibres of moderate tow (12K to 24K).

Since Resin Transfer Moulding is the method of choice for mass production of composites, there still remains a need for the manufacture of improved FRP composites by elimination of racetracking defects, reduction of fabric displacement when using pressure injection systems and also reduction of the manufacturing process costs.

EP-A-909845 discloses a process for the manufacture of fibre reinforced plastics (FRP) composites comprising impregnation of heavy tow fibres with low viscosity resin by injection of the resin into a fabric sheet, wherein the tow of the fibres is equal or greater than 24000 filaments in accordance with the preamble of claim 1.

FR-A-2 783 197 discloses a glass fiber-reinforced resin part manufactured without stepwise varying the pressure when injecting the resin.

### DISCLOSURE OF THE INVENTION

In view of the problems described above and of the wide scope for cost reduction and process improvement, the invention proposes a process according to claim 1.

Preferred embodiments are set forth in the dependent claim 1.

### BRIEF DESCRIPTION OF THE DRAWINGS

Figure 1 shows a top view of a mould whereby the resin injection inlet is shown.
Figure 2 shows a cross sectional view of a mould with a reduced cavity high on the resin injection side.
Figure 3 shows a top view of a mould whereby the fibres are perpendicular to the resin flow.
Figure 4 shows a top view of a mould whereby the fibres are parallel to the resin flow (Fig. 4a) and whereby the fibres are arranged so as not to be perpendicular to the resin flow (Fig. 4b).
Figure 5 shows a top view of a mould whereby the fibres are displaced due to the resin high flow rate.
Figure 6 shows a top view of a mould whereby macroscopical racetracking of the resin occurs.
Figure 7 shows a cross sectional view of interlaminar racetracking in between the fabric layers.
Figures 8 and 9 are views of heavy tow impregnated carbon fibres obtained with state of the art technology (fig. 8) and with the technology of the present invention (fig. 9).
Figure 10 shows a graph of pressure versus time showing the different pressure ramps that are used in the present invention.

### DETAILED DESCRIPTION OF THE PREFERRED EMBODIMENTS

The present invention is directed to a process for the manufacture of fibre reinforced plastics (FRP) composites. The process consists in the impregnation of fibres with resin.

Again, although the following description relates to carbon fibre reinforced plastics (CFRP), it is to be understood that the invention may be used for the manufacture of other fibre reinforced plastics such as glass fibre reinforced plastics (GFRP).

Carbon fibres (also called graphite fibres) are industrially produced from polyacrylonitrile fibre or pitch. Oxidation of these starting materials followed by carbonizing/graphitizing stages yield carbon fibre filaments which are then grouped to form tows.

The "heavy tow" fibres of the present invention refer to fibre tows containing at least 24000 filaments.

The fibres of the present invention can be assembled in many different ways, any of which are suitable for application in the present invention. For instance, unidirectional arrangements such as tapes, strips, fabrics or even single tow can be used. The fibre can be used as twisted yarn, untwisted yarn or non-twisted yarn. Furthermore, the tows can be weaved into a cloth with interlacing points. The woven fabric (in the form of mats, knitted fabrics etc.) may be balanced or multiaxial. The style of weaving may be a plain weave, a twill weave or a satin weave.

In addition to the carbon fibres, inorganic fibres such as glass fibres, alumina fibres, or silicon nitride fibres, or organic fibres such as aramid fibres or nylon may be used. These fibres may be long fibres, short fibres, woven fabric, a mattress, or a combination of these, and may be orderly or disorderly arranged in the carbon fibres. Preferably these will be glass fibres.

Typical resins for application in the present invention are thermosetting resins such as epoxy resins and vinyl ester resins, or thermoplastic resins, such as nylon, polycarbonate and also monomers or oligomers which react to be polymers etc.

Preferably, the resin of the present invention is a thermoplastic resin. As used herein, the term "thermoplastic resin" is meant to include those polymers which soften when exposed to heat and then return to original condition when cooled to room temperature.

The main advantages of thermoplastics over thermosets are indefinite shelf life, good toughness and the fact that processing is concerned with physical transformations only. There is no chemistry involved and therefore extended cure cycles are not necessary. As a consequence there is potential for rapid, low cost fabrication with simplified quality control procedures.

The resin used in the present invention features a low viscosity at the time of impregnation. The viscosity of the resin to be injected is less than 50mPa.s.

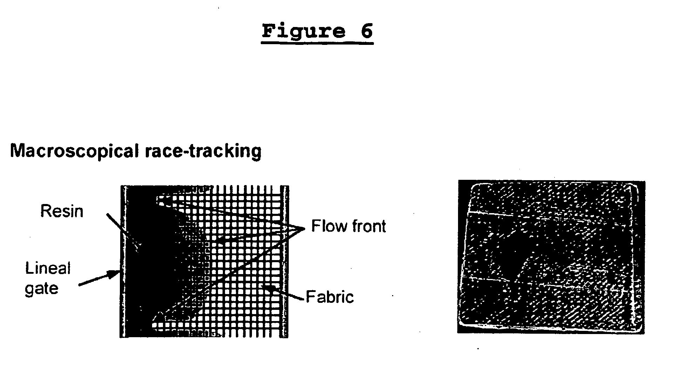

In a preferred embodiment, sheets of woven fabric comprising the fibres described above are cut into a particular shape required for incorporation to the mould to obtain a fibre woven fabric base material for forming a CFRP composite. The shape of the preform is preferably cut accurately so as to fit perfectly into the mould and thus avoid macroscopical racetracking of the resin as is depicted in figure 6. The number of the sheets to be stacked is selected according to the structure or appearance desired for the composite.

In the case where several sheets are used, the laminate is preferably multicompacted so as to provide a homogeneous fibre area. Compaction of the lay-up is carried out by the application of a temporary vacuum bag and vacuum to remove trapped air. The repetition of such compaction provides a homogeneous fibre area which can be impregnated with the low viscosity resin of the present invention.

The fabric sheet is then clamped to the mould in a way described below, the mould is closed, heat is applied and the resin is injected under pressure.

The use of low viscosity resin in the impregnation process of the present invention results in a high flow rate. Such high flow rate can also be increased by the application of pressure and can result in fabric displacement. In order to avoid fabric displacement caused by high flow rate of the resin, the present invention teaches several solutions.

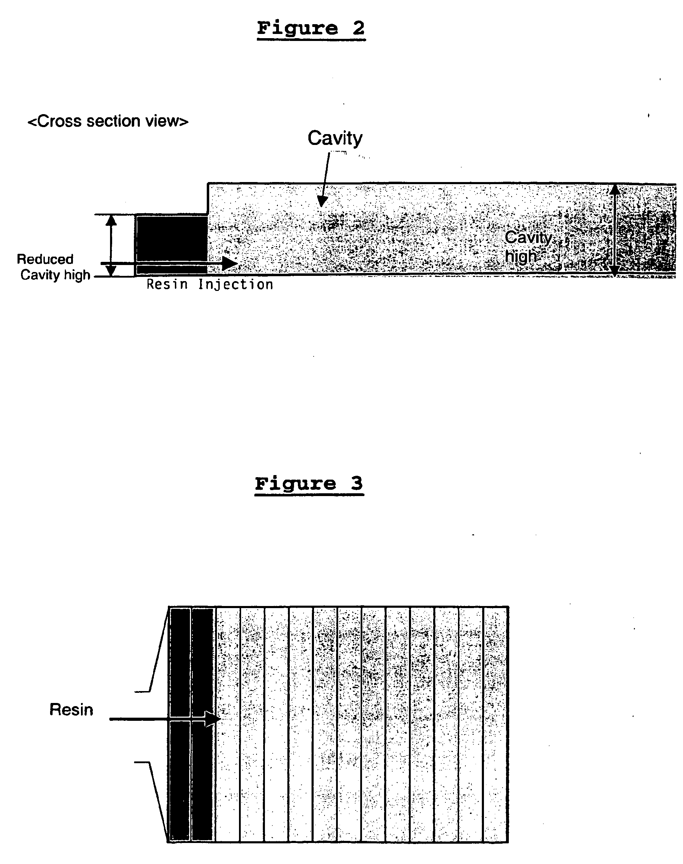

First, the fibre fabric is preferably clamped to the mould. The edges of the tool are preferably lower than the cavity high (see figure 2) and the fibre volume content at the edges is preferably less than 55%, most preferably less than 50%.

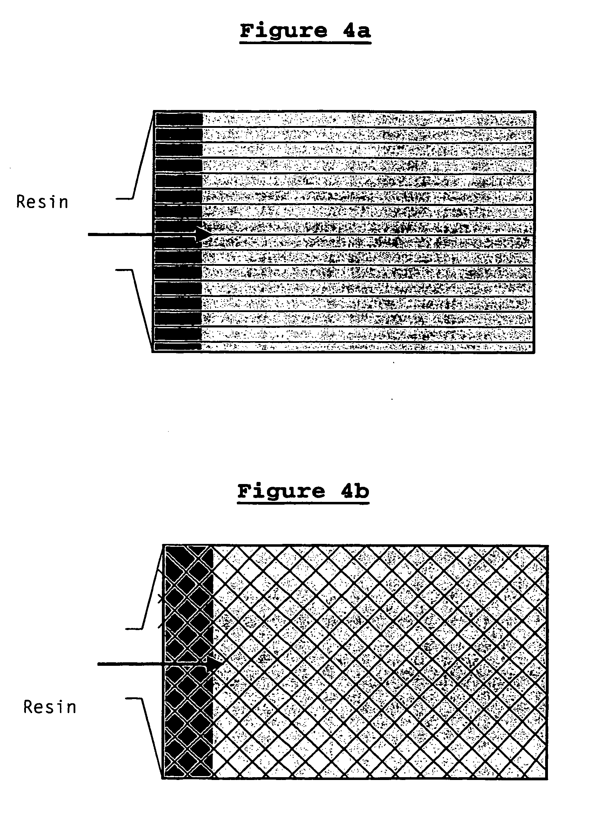

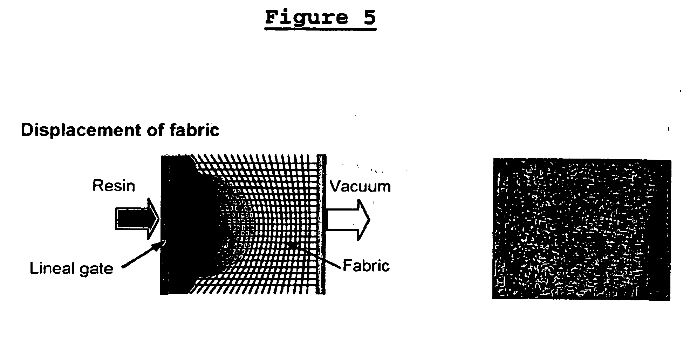

Secondly, the fibre fabric is preferably placed in the mould in such an orientation that the carbon fibres are not perpendicular to the resin flow (see figures 4a and 4b). A perpendicular orientation of the fibres with respect to the resin flow such as that depicted in figure 3, would result in the fabric displacement depicted in figure 5. In that respect, the use of weaved fabric with interlacing points is also preferable.

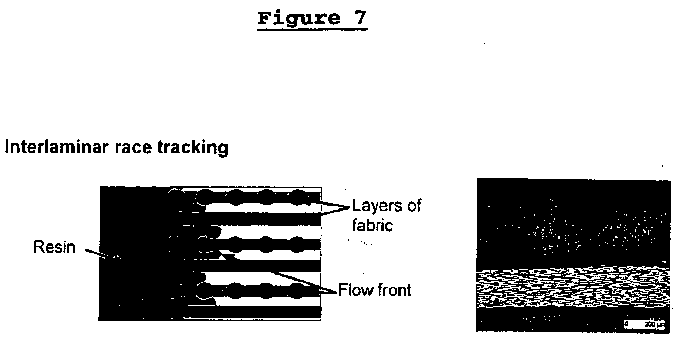

In the present invention, it is possible that the fibre volume content of the laminate be less than 30%. A lower fibre volume content than that used in conventional manufacturing methods (30%-60%) usually results in a nonuniform distribution of the fibre in the cavity. For instance, the fibre volume content inside the fibre bundles themselves will be high, whereas the fibre volume content will be low in between the different fabric layers. In conventional manufacturing methods, the lower fibre volume content will result in interlaminar racetracking (i.e. faster resin flow, even with relatively high viscosity resin) as shown in figure 7 and thus a worse impregnation of the fibres ensues. The use of very low viscosity resin in the present invention is therefore preferable in order to improve the impregnation of the fibres even when a high flow rate is used.

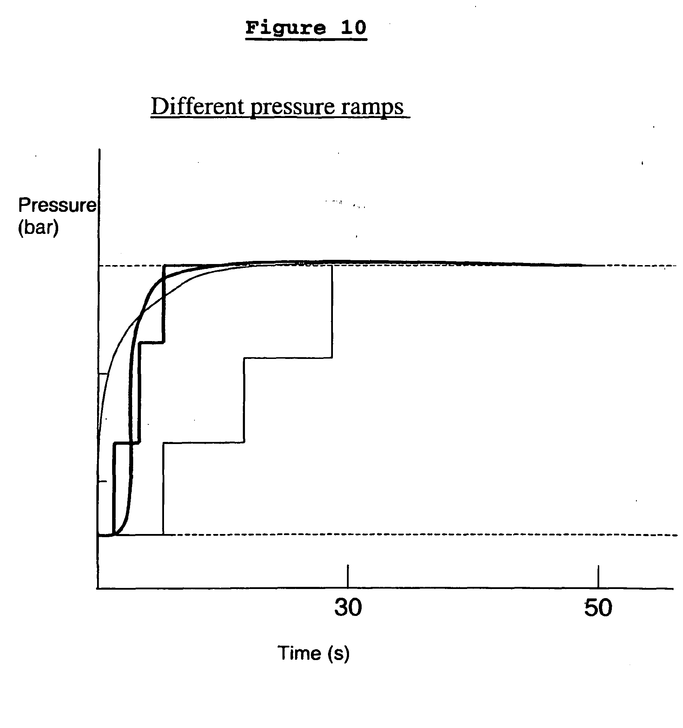

In order to further optimise impregnation of the fibres, the resin is injected directly in the fabric. Also, the pressure applied for the resin injection is incremented stepwise so as to allow the flow front of the resin to become balanced before the next pressure increment, thus resulting in better impregnation (see figure 10). Typically the resin will be injected anywhere from 1,03 bar to 17,24 bar (15 psi to 250 psi).

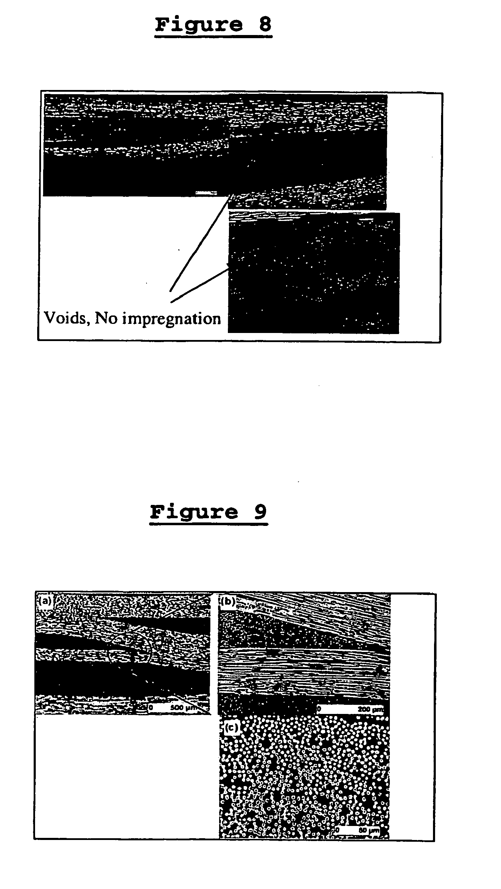

Once the fabric sheet is fully impregnated, resin solidifies and the CFRP composite can be demoulded. The resulting CFRP composites of the present invention are free of "dry spots" as shown in fig.9. A comparison with fibres impregnated according to current methods can be seen on fig. 8.

The finishing operations are then minimal due to the near net shape of the component and the good surface finish supplied by the mould.

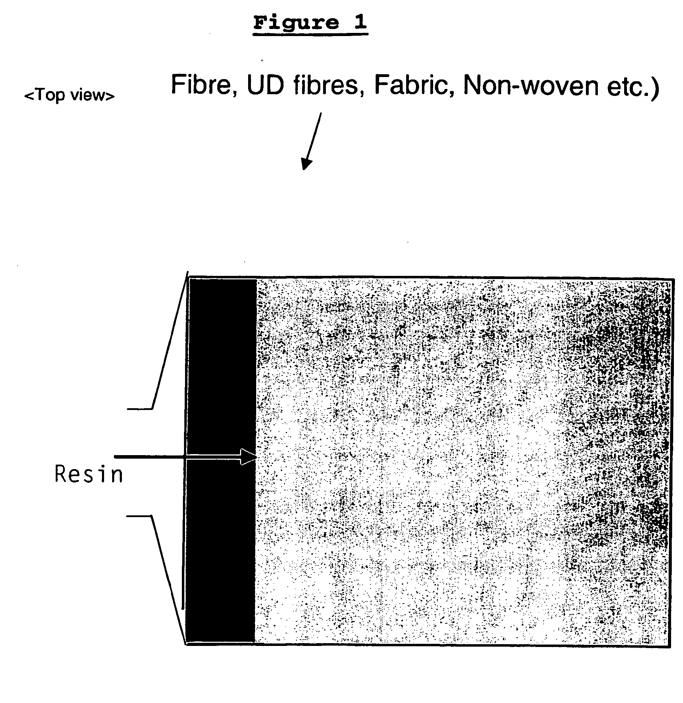

The manufacturing device used to carry out the process described above is preferably a two-part mould, with an inlet for the injection of the resin (see figure 1), the mould having a reduced cavity high at the edges (see figure 2).

The process of the present invention carried out using the manufacturing device described above therefore results in high quality low cost CFRP composites.

## Claims

1. A process for the manufacture of fibre reinforced plastics (FRP) composites, comprising the following step:
- impregnation of heavy tow fibres with low viscosity resin by injection of the resin into a fabric sheet, wherein the tow of the fibres is equal or greater than 24000 filaments and **characterized in that** the resin, at the time of impregnation, has a viscosity less than 50 mPa · s and the resin is injected with stepwise increments of pressure such that the flow front of the resin is balanced before the following pressure increment.

2. The process according to claim 1 wherein the fibres are carbon fibres or glass fibres.

3. The process according to claim 2 wherein the carbon fibres are combined with other types of fibres.

4. The process according to claim 3 wherein the other types of fibres are glass fibres.

5. The process according to any of the preceding claims wherein the fibres are woven into fabric sheets with interlacing points.

6. The process according to claim 5 wherein the fabric sheets are multi-compacted.

7. The process according to claim 5 and 6 wherein the volume content of the fibres in the fabric sheets is less than 60%, preferably less than 30%.

8. The process according to claim 1 wherein the resin is a thermoplastic resin.

9. The process according to claim 1 wherein the injection point of the resin is directly in the fabric area.

10. The process according to claim 1 wherein the flow front of the injected resin is against gravity.

11. The process according to any of the preceding claims wherein the flow direction of the injected resin is not perpendicular to the orientation of the fibre.

12. The process according to any of the preceding claims wherein the fabric is clamped at the edges of a mould before resin injection.

13. The process according to claim 12 wherein the edges of the mould have a reduced cavity height.

14. The process according to claim 12 wherein the fibre volume fraction at the reduced cavity height is no more than 55%, preferably no more than 50%.

15. The process according to one of claims 1 to 14 wherein the fibres are impregnated with resin from an injection side towards a downstream side.

16. The process according to claim 15 wherein the time interval in between the pressure increments is such that the pressure at the flow front is balanced across the downstream side before the sequential pressure increment.

17. The process according to claims 15 and 16, wherein the fibres are carbon fibres or glass fibres.

## Patentansprüche

1. Verfahren zur Herstellung faserverstärkter Kunststoff- (FRP) Verbundwerkstoffe, das den folgenden Schritt aufweist:
- Imprägnierung von schweren Faserstränge mit Harz niedriger Viskosität durch Einspritzen des Harzes in eine Stoffbahn,
wobei der Strang aus den Fasern gleich oder größer als 24000 Fäden ist und **dadurch gekennzeichnet ist, dass**
das Harz zur Zeit der Imprägnierung eine Viskosität von weniger als 50 mPa·s hat und das Harz mit schrittweisen Druckinkrementen eingespritzt wird, so dass die Fließfront des Harzes vor dem folgenden Druckinkrement ausgeglichen wird.

2. Verfahren nach Anspruch 1, wobei die Fasern Carbonfasern oder Glasfasern sind.

3. Verfahren nach Anspruch 2, wobei die Carbonfasern mit anderen Fasertypen kombiniert werden.

4. Verfahren nach Anspruch 3, wobei die anderen Fasertypen Glasfasern sind.

5. Verfahren nach einem der vorhergehenden Ansprüche, wobei die Fasern in Stoffbahnen mit Vernetzungspunkten gewebt werden.

6. Verfahren nach Anspruch 5, wobei die Stoffbahnen mehrfach verdichtet sind.

7. Verfahren nach Anspruch 5 und 6, wobei der Volumengehalt der Fasern in den Stoffbahnen weniger als 60%, bevorzugt weniger als 30%, ist.

8. Verfahren nach Anspruch 1, wobei das Harz ein thermoplastisches Harz ist.

9. Verfahren nach Anspruch 1, wobei der Einspritzpunkt des Harzes direkt in dem Stoffbereich ist.

10. Verfahren nach Anspruch 1, wobei die Fließfront des eingespritzten Harzes gegen die Schwerkraft ist.

11. Verfahren nach einem der vorhergehenden Ansprüche, wobei die Strömungsrichtung des eingespritzten Harzes nicht senkrecht zu der Ausrichtung der Faser ist.

12. Verfahren nach einem der vorhergehenden Ansprüche, wobei der Stoff vor der Harzeinspritzung an den Rändern einer Form eingespannt wird.

13. Verfahren nach Anspruch 12, wobei die Ränder der Form eine verringerte Hohlraumhöhe haben.

14. Verfahren nach Anspruch 12, wobei der Faservolumenanteil bei der verringerten Hohlraumhöhe nicht mehr als 55%, bevorzugt nicht mehr als 50%, ist.

15. Verfahren nach einem der Ansprüche 1 bis 14, wobei die Fasern mit einem Harz aus einer Einspritzseite in Richtung einer stromabwärtigen Seite imprägniert werden.

16. Verfahren nach Anspruch 15, wobei das Zeitintervall zwischen den Druckinkrementen derart ist, dass der Druck der Fließfront über die stromabwärtige Seite vor dem anschließenden Druckinkrement ausgeglichen wird.

17. Verfahren nach den Ansprüchen 15 und 16, wobei die Fasern Carbonfasern oder Glasfasern sind.

## Revendications

1. Procédé pour la fabrication de composites en plastique renforcé de fibres (PRF), comprenant l'étape suivants :
- imprégnation de fibres de câble lourd avec une résine de basse viscosité par injection de la résine dans une feuille d'étoffe, le câble des fibres étant supérieur ou égal à 24 000 filaments, et **caractérisé en ce que**
la résine, au moment de l'imprégnation, présente une viscosité inférieure à 50 mPa.s et la résine est injectée avec des incréments de pression par étapes de sorte que l'écoulement à l'avant de la résine est équilibré avant l'incrément de pression suivant.

2. Procédé selon la revendication 1, dans lequel les fibres sont des fibres de carbone ou des fibres de verre.

3. Procédé selon la revendication 2, dans lequel les fibres de carbone sont combinées à d'autres types de fibres.

4. Procédé selon la revendication 3, dans lequel les autres types de fibres sont des fibres de verre.

5. Procédé selon l'une quelconque des revendications précédentes, dans lequel les fibres sont tissées en feuilles d'étoffe avec des points d'entrecroisement.

6. Procédé selon la revendication 5, dans lequel les feuilles d'étoffe sont multicompactées.

7. Procédé selon les revendications 5 et 6, dans lequel la teneur en volume des fibres dans les feuilles d'étoffe est inférieure à 60 %, de préférence inférieure à 30 %.

8. Procédé selon la revendication 1, dans lequel la résine est une résine thermoplastique.

9. Procédé selon la revendication 1, dans lequel le point d'injection de la résine est directement dans la zone d'étoffe.

10. Procédé selon la revendication 1, dans lequel l'écoulement avant de la résine injectée va contre la pesanteur.

11. Procédé selon l'une quelconque des revendications précédentes, dans lequel la direction d'écoulement de la résine injectée n'est pas perpendiculaire à l'orientation de la fibre.

12. Procédé selon l'une quelconque des revendications précédentes, dans lequel l'étoffe est ajustée par serrage au niveau des bords d'un moule avant l'injection de résine.

13. Procédé selon la revendication 12, dans lequel les bords du moule présentent une hauteur de cavité réduite.

14. Procédé selon la revendication 12, dans lequel la fraction en volume de fibres au niveau de la hauteur de cavité réduite n'est pas supérieure à 55 %, de préférence pas supérieure à 50 %.

15. Procédé selon l'une quelconque des revendications 1 à 14, dans lequel les fibres sont imprégnées avec une résine depuis un côté d'injection vers un côté aval.

16. Procédé selon la revendication 15, dans lequel l'intervalle temporel entre les incréments de pression est tel que la pression à l'avant de l'écoulement est équilibrée sur tout le côté aval avant l'incrément de pression séquentiel.

17. Procédé selon les revendications 15 et 16, dans lequel les fibres sont des fibres de carbone ou des fibres de verre.
